# EUROPÄISCHE PATENTSCHRIFT

(11) **EP 2 196 163 B1**
(45) Veröffentlichungstag und Bekanntmachung des Hinweises auf die Patenterteilung: **25.05.2016**
(21) Anmeldenummer: 08020869.7
(22) Anmeldetag: 02.12.2008
(51) Int. Cl.: A61C 1/18, F16C 35/063, F16C 23/06

(54) **Medizinisches, insbesondere dentales, Handstück mit einer Lageranordnung für ein Drehteil**
Medical, in particular dental, handpiece with a bearing arrangement for a turning part
Pièce à main médicale, en particulier dentaire, avec un palier pour une partie tournante

(43) Veröffentlichungstag der Anmeldung: 16.06.2010
(73) Patentinhaber: W & H Dentalwerk Bürmoos GmbH, 5111 Bürmoos (AT)
(72) Erfinder: Rudholzer, Andreas, 5151 Nussdorf (AT); Rusch, Stefan, 5120 St. Pantaleon (AT); Ploy, Gernot, 5111 Bürmoos (AT); Hochradl, Gerhard, 5120 St. Pantaleon (AT)

(56) Entgegenhaltungen:
- EP-A- 0 958 791
- DE-C- 466 388

## Beschreibung

Die vorliegende Erfindung bezieht sich auf eine medizinisches, insbesondere dentales, Handstück mit einer Lageranordnung nach dem Oberbegriff des Anspruches 1.

Derartige medizinische, insbesondere dentale, Handstücke dienen zum Antrieb medizinischer Werkzeuge, wobei ein Antriebsmechanismus für das Werkzeug zumindest ein mittels einer Lageranordnung drehbar gelagertes Drehteil aufweist. Dieses kann z.B. eine zur Aufnahme des Werkzeuges dienende Werkzeugaufnahme, bei einem mechanischen Antrieb eine drehbar gelagerte Welle oder bei einem mit Druckgas betriebenen Turbinenantrieb ein vorzugsweise im Kopf angeordneter Rotor sein. Medizinische, insbesondere dentale, Handstücke können somit in verschiedenen Bereichen drehbar gelagerte Drehteile aufweisen.

Die Lagerung des Drehteils erfolgt mit Hilfe zumindest eines Lagers, welches eine Rotation des Drehteils hinsichtlich des Handstücks ermöglicht. Vorzugsweise kommt ein Wälzlager zum Einsatz, welches zumindest einen Wälzkörper aufweist, der zwischen einem Lagerinnenring und einem Lageraussenring angeordnet ist. Lagerinnenring und Lageraussenring bilden somit jeweils eine Lauffläche für den zumindest einen Wälzkörper.

Bei dem zur Behandlung vorgesehenen Werkzeug kann es sich beispielsweise um ein Rotationswerkzeug, wie z.B. einen Bohrer, oder um ein hin- und her bewegbares Werkzeug, wie z.B. einer Feile zur Wurzelkanalaufbereitung, handeln.

Eine derartiges medizinisches, insbesondere dentales, Handstück mit einer Lageranordnung für ein Drehteil ist aus der DE 466 388 C und der EP 0 958 791 B1 bekannt.

Derartige im Stand der Technik bekannte Lageranordnungen für medizinische, insbesondere dentale, Handstücke weisen ein Drehteil, vorzugsweise eine Trägerhülse für ein Spannsystem oder eine rotierende Welle, sowie zumindest ein Wälzlager, vorzugsweise ein Kugellager, mit jeweils einem Lagerinnenring, einem Lageraussenring und zumindest einem Wälzkörper auf. Das zumindest eine Wälzlager lagert mittels dem Lagerinnenring und dem Lageraussenring das Drehteil drehbar gegenüber dem Handstück, wobei am Lagerinnenring auf der einen Seite der zumindest eine Wälzkörper zwischen Lagerinnenring und Lageraussenring gelagert ist und auf der gegenüberliegenden Seite des Lagerinnenrings das Drehteil gelagert ist.

Als nachteilig dieser Ausgestaltung der Lagerung für das Drehteil erweist sich der Aussendurchmesser der Lageranordnung, der sich auf Grund der Lagerung des Drehteils auf der Innenseite des Lagerinnenring ergibt. Dieser bestimmt sich durch den Durchmesser der einzelnen Bauteile, nämlich des Drehteils, des Lagerinnenrings, des zumindest einen Wälzkörpers sowie des Lageraussenrings.

Einen weiteren Nachteil der im Stand der Technik bekannten Lagerung des Drehteils bringt die Montage des zu lagernden Drehteils in dem Lagerinnenring des zumindest einen Wälzlagers mit sich. Im Stand der Technik ist es üblich derartige Wälzlager mittels Aufpressen auf das Drehteil zu montieren. Diese Montage führt jedoch zu einer Beeinträchtigung der Wälzlager. Durch das Aufpressen des Lagerinnenrings auf das Drehteil wird der Wälzlageraufbau, insbesondere das erwünschte Spiel des zumindest einen Wälzkörpers zu dessen Laufflächen an dem Lagerinnenring und an dem Lageraussenring, negativ beeinflusst. Das Aufpressen des Lagerinnenrings auf das Drehteil bewirkt eine Weitung des Lagerinnenrings im Bereich der Laufflächen des zumindest einen Wälzkörpers. Dies führt zu einer Änderung der Abstimmung zwischen dem zumindest einen Wälzkörper und dessen Laufflächen an den Lagerringen und somit zu einer unerwünschten Verkürzung der Lebensdauer der Wälzlager.

Der vorliegenden Erfindung liegt daher die Aufgabe zugrunde, eine Lageranordnung für ein Drehteil eines medizinischen, insbesondere dentalen, Handstücks zu schaffen, welches bei einfacher Herstellung die Nachteile des Stand der Technik vermeidet und es insbesondere ermöglicht, die Drehteile in einfacher und Platz sparender Weise zu lagern.

Gemäß einem Ausführungsbeispiel zur Lagerung eines Drehteils in einem medizinischen, insbesondere dentalen, Handstück mit einem als Werkzeugaufnahme ausgebildeten Drehteil, welche eine Spannhülse und ein Spannglied aufweist, und mindestens einem zur Lagerung des Drehteils vorgesehenen Wälzlager, welches einen Lagerinnenring und einen Lageraussenring, mit jeweils einer Lauffläche für den zumindest einen dazwischen angeordneten Wälzkörper aufweist, wird die Spannhülse der Werkzeugaufnahme zumindest an einem Lagerring an der die Lauffläche für den zumindest einen Wälzkörper aufweisenden Seite gelagert.

Zur Lagerung des Drehteils vorzugsweise am Lagerinnenring an der die Lauffläche für den zumindest einen Wälzkörper aufweisenden Seite weist dieser neben der Lauffläche für den zumindest einen Wälzkörper eine Anlagefläche für das Drehteil auf. Das Anbringen einer zusätzlichen Anlagefläche neben der Lauffläche des zumindest einen Wälzkörpers erfordert eine Erhöhung der Bauhöhe des Lagerringes. Somit weist dieser Lagerring eine höhere Bauhöhe als der zum Wälzlager gehörende zweite Lagerring auf.

Das zu lagernde Drehteil, welches insbesondere eine Hohlwelle, sein kann, ist zur Aufnahme des Lagerinnenrings vorzugsweise mit einem Durchbruch ausgebildet. Somit wird das hohle Drehteil in dessen Durchbruch an dem Lagerinnenring an der die Lauffläche für den zumindest einen Wälzkörper aufweisenden Seite gelagert.

Die vorliegende Lageranordnung für ein Drehteil zeichnet sich durch eine Reihe erheblicher Vorteile aus.

Die Lagerung des Drehteils zumindest an einem Wälzlager an einem der Lagerringe, vorzugsweise am Lagerinnenring, an der die Lauffläche für den zumindest einen Wälzkörper aufweisenden Seite, ermöglicht eine Verringerung des Durchmessers der Lageranordnung. Durch die vorliegende Ausgestaltung wird der Durchmesser der Lageranordnung allein durch die Maße des Wälzlagers bestimmt, nämlich durch den Durchmesser des Lagerinnenring, des Wälzkörpers, sowie des Lageraussenrings und nicht wie im Stand der Technik beschrieben durch den Durchmesser des Drehteils und zusätzlich durch den Wälzlageraufbau.

Einen weiteren Vorteil der vorliegenden Lageranordnung bringt die Montage des zu lagernden Drehteils an dem die Anlagefläche aufweisenden Lagerring mit sich. Durch die ebenfalls wie im Stand der Technik beschriebene Montage der Lageranordnung mittels Aufpressen wird nun bei der vorliegenden Erfindung das Drehteil neben den Laufflächen des zumindest einen Wälzkörpers an einem der Lagerringe aufgepresst. Dies führt somit zu keiner Beeinträchtigung der Abstimmung zwischen dem zumindest einen Wälzkörper und dessen Laufflächen an den Lagerringen.

Des Weiteren ermöglicht die vorliegende Lageranordnung, neben der Minimierung des Aussendurchmessers des Lageraufbaus, mittels Anbringen eines Rücksprungs im Durchbruch des Drehteils zur Aufnahme des die Anlagefläche aufweisenden und verlängerten Lagerrings, das Beibehalten des Innendurchmessers des verwendeten Drehteils. Dies führt Vorteilhafterweise bei Verwendung einer Werkzeugaufnahme mit einer Spannhülse als Drehteil zu einer Werkzeugführung des verwendeten Werkzeugs in der Lageranordnung mittels des Lagerrings.

Des Weiteren wird es mittels der vorliegenden Lageranordnung, bei Verwendung einer Spannhülse als Drehteil, ermöglicht, Drehmoment auf das einzuspannende Werkzeug mittels des Lagerinnenrings zu übertragen. Hierzu ist vorgesehen, dass der Lagerring mit einem Mehrkant und das Werkzeug mit einer komplementären Ausformung versehen ist. Vorzugsweise ist dieser als Polygon, insbesondere als Hexagon, ausgebildet.

Im Rahmen der Erfindung versteht es sich selbstverständlich, dass die Lageranordnung nicht auf die in der Beschreibung genannten Drehteile beschränkt ist.

Nachfolgend wird die Erfindung anhand eines Ausführungsbeispiels und in Verbindung mit den beigefügten Zeichnungen erläutert.

Dabei zeigt:
Figur 1 einen Längsschnitt durch den Kopfbereich eines medizinischen Handstücks mit einer Werkzeugaufnahme als zu lagerndes Drehteil,
Figur 2 die Werkzeugaufnahme aus Figur 1 in unverbauten Zustand.

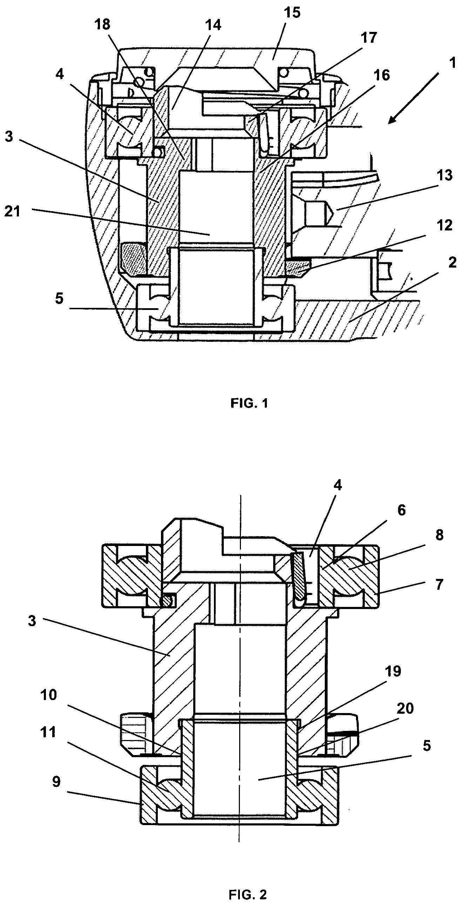

In Figur 1 ist der Kopfbereich eines medizinischen, insbesondere dentalen, Handstücks 1 mit einem Kopfgehäuse 2 und einem Druckknopf 15 gezeigt. In dem Kopfgehäuse 2 ist ein Drehteil 3 mit einem Durchbruch oder Öffnung 21 sowie zwei zur Lagerung des Drehteils 3 vorgesehene Wälzlager 4, 5 untergebracht. Das Drehteil 3 ist hierbei als Werkzeugaufnahme ausgebildet und weist eine Spannhülse 16 sowie ein Spannglied 14 mit einem Verriegelungskörper 17 und einem Mitnehmer 18 zur Drehmomentübertragung auf. Des Weiteren ist ein Kronenrad 12 abgebildet, welches zur Rotationsübertragung von der Welle 13 auf das Drehteil 3 dient.

Das in Figur 2 dargestellte Drehteil 3 wird von der in der Figur 1 gezeigten Werkzeugaufnahme in unverbauten Zustand gebildet. Die Lagerung des Drehteils 3 erfolgt mittels zweier Wälzlager 4, 5, welche jeweils einen eigenen Lagerinnenring 6, 10 und Lageraussenring 7, 9 aufweisen. Zwischen den Lagerringen 6, 7, 9, 10 ist jeweils zumindest ein Wälzkörper 8, 11 angeordnet.
Das Drehteil 3 wird zumindest an einem Wälzlager 5 an einem Lagerring 9, 10 an der die Lauffläche für den zumindest einen Wälzkörper 11 aufweisenden Seite gelagert. Der Lagerinnenring 10 weist neben einer Lauffläche für den zumindest einen Wälzkörper 11 eine Anlagefläche 20 auf, um das Drehteil 3 aufzunehmen oder damit verbunden zu werden und drehbar gegenüber dem Handstück zu lagern. Hierzu weist der Lagerinnenring 10 eine höhere Bauhöhe auf als der zum Wälzlager gehörige Lageraussenring 9. Um neben einer Minimierung des Aussendurchmessers der Lageranordnung auch den Innendurchmesser des Drehteils 3 beizubehalten, ist es vorteilhaft an dem Drehteil 3 einen Rücksprung 19 in dessen Durchbruch 21 vorzusehen. Durch die Aufnahme des verlängerten, die Anlagefläche 20 aufweisenden, Lagerinnenrings 10 in dem Rücksprung 19 kann somit der Innendurchmesser des Drehteils 3 beibehalten werden. Folglich kann der Lagerinnenring 10, bei Verwendung des Drehteils 3 als Spannhülse einer Werkzeugaufnahme, auf der der Anlagefläche und Lauffläche für den zumindest einen Wälzkörper 11 gegenüberliegenden Seite als Werkzeugführung für das einzuspannende Werkzeug verwendet werden. Des Weiteren können auf der zur Werkzeugführung dienenden Seite Mitnehmer zur Drehmomentübertragung auf das Werkzeug angeordnet sein. Hierzu kann die innenliegende Seite des Lagerinnenrings 10 vorzugsweise als Mehrkant, insbesondere als Hexagon, ausgebildet sein.

Die Erfindung ist nicht auf das beschriebene Ausführungsbeispiel beschränkt. Im Rahmen der Erfindung versteht es sich selbstverständlich, dass die Lagerung des Drehteils in gleicher Weise an der Innenseite des Lageraussenrings erfolgen kann.

## Patentansprüche

1. Medizinisches, insbesondere dentales, Handstück (1) mit einer Werkzeugaufnahme, welche eine Spannhülse (16) und ein Spannglied (14) aufweist, und mindestens einem zur Lagerung der Werkzeugaufnahme vorgesehenen Wälzlager (4, 5), welches einen Lagerinnenring (6, 10) und einen Lageraussenring (7, 9), mit jeweils einer Lauffläche für den zumindest einen dazwischen angeordneten Wälzkörper (8, 11) aufweist, **dadurch gekennzeichnet, dass** die Spannhülse (16) der Werkzeugaufnahme zumindest an einem Lagerring (6, 7, 9, 10) an der die Lauffläche für den zumindest einen Wälzkörper (8, 11) aufweisenden Seite gelagert ist.

2. Medizinisches Handstück nach Anspruch 1, **dadurch gekennzeichnet, dass** die Spannhülse (16) am Lagerinnenring (6, 10) an der die Lauffläche für den zumindest einen Wälzkörper aufweisenden Seite gelagert ist.

3. Medizinisches Handstück nach Anspruch 1, **dadurch gekennzeichnet, dass** das die Spannhülse (16) am Lageraussenring (7, 9) an der die Lauffläche für den zumindest einen Wälzkörper aufweisenden Seite gelagert ist.

4. Medizinisches Handstück nach einem der vorherigen Ansprüche, **dadurch gekennzeichnet, dass** das Spannglied (14) zumindest eine Spannlasche umfasst.

5. Medizinisches Handstück nach einem der vorherigen Ansprüche, **dadurch gekennzeichnet, dass** das Spannglied (14) zumindest einen in eine werkzeugseitige Nut eingreifenden Verriegelungskörper (17) umfasst.

6. Medizinisches Handstück nach einem der vorherigen Ansprüche, **dadurch gekennzeichnet, dass** die Werkzeugaufnahme des Weiteren ein Kronenrad (12) oder einen Rotor zur Übertragung der Antriebsbewegung aufweist.

7. Medizinisches Handstück nach einem der vorherigen Ansprüche, **dadurch gekennzeichnet, dass** die Werkzeugaufnahme zumindest einen Mitnehmer (18) zur Drehmomentübertragung auf das Werkzeug aufweist.

8. Medizinisches Handstück nach einem der vorherigen Ansprüche, **dadurch gekennzeichnet, dass** der Lagerinnenring (6, 10) zur Drehmomentübertragung auf ein in die Spannhülse (16) einzuspannendes Werkzeug ausgebildet ist, wobei der Lagerinnenring (6, 10) mit einem Mehrkant, insbesondere einem Hexagon, für eine komplementäre Ausformung an dem Werkzeug versehen ist.

9. Medizinisches Handstück nach Anspruch 7, **dadurch gekennzeichnet, dass** der Mitnehmer zur Drehmomentübertragung durch eine polygonale Ausformung, insbesondere als Hexagon, ausgebildet ist.

10. Medizinisches Handstück nach einem der vorherigen Ansprüche, **dadurch gekennzeichnet, dass** die Werkzeugaufnahme einen Rücksprung (19) aufweist in den der Lagerring (6, 7, 9, 10), an dem die Werkzeugaufnahme an der die Lauffläche für den zumindest einen Wälzkörper aufweisenden Seite gelagert ist, eingreift.

## Claims

1. A medical, in particular dental, handpiece (1) having a tool receptacle which comprises a chucking sleeve (16) and a chucking member (14) and at least one roller bearing (4, 5) provided for bearing support of the tool receptacle, said rotary bearing having a bearing inner ring (6, 10) and a bearing outer ring (7, 9), each with a raceway for the at least one roller element (8, 11) arranged in between, **characterized in that** the chucking sleeve (16) of the tool receptacle is supported on at least one bearing ring (6, 7, 9, 10) on a side having the raceway for the at least one roller element (8, 11).

2. The medical handpiece according to claim 1, **characterized in that** the chucking sleeve (16) is supported on the bearing inner ring (6, 10) on the side having the raceway for the at least one roller element.

3. The medical handpiece according to claim 1, **characterized in that** the chucking sleeve (16) is supported on the bearing outer ring (7, 9) on the side having the raceway for the at least one roller element.

4. The medical handpiece according to any one of the preceding claims, **characterized in that** the chucking member (14) comprises at least one chucking bracket.

5. The medical handpiece according to any one of the preceding claims, **characterized in that** the chucking member (14) comprises at least one locking body (17) which engages a groove on the tool side.

6. The medical handpiece according to any one of the preceding claims, **characterized in that** the tool receptacle further comprises a crown wheel (12) or a rotor for transmitting the drive motion.

7. The medical handpiece according to claim 6, **characterized in that** the tool receptacle comprises at least one dog element (18) for transmitting torque to the tool.

8. The medical handpiece according to any one of the preceding claims, **characterized in that** the bearing inner ring (6, 10) is designed for transmitting torque to the tool which is to be chucked by the chucking sleeve (16), wherein the bearing inner ring (6, 10) is provided with a polygon, in particular a hexagon, for a complementary shape on a tool.

9. The medical handpiece according to claim 7, **characterized in that** the dog element for transmitting torque is designed by a polygonal shape, in particular by a hexagon.

10. The medical handpiece according to any one of the preceding claims, **characterized in that** the tool receptacle comprises a recess (19) in which the bearing ring (6, 7, 9, 10), on which the tool receptacle is supported on the side having the raceway for the at least one roller element, engages.

## Revendications

1. Pièce à main (1) médicale, en particulier dentaire, avec un raccordement d'outil qui présente une douille de serrage (16) et un organe de serrage (14), et au moins un palier à roulement (4, 5) prévu pour le logement du raccordement d'outil, lequel palier présente une bague intérieure de palier (6, 10) et une bague extérieure de palier (7, 9) avec respectivement une surface de roulement pour l'au moins un corps de roulement (8, 11) disposé entre celles-ci, **caractérisée en ce que** la douille de serrage (16) du raccordement d'outil est logée au moins sur une bague de palier (6, 7, 9, 10) sur le côté présentant la surface de roulement pour l'au moins un corps de roulement (8, 11).

2. Pièce à main médicale selon la revendication 1, **caractérisée en ce que** la douille de serrage (16) est logée sur la bague intérieure de palier (6, 10) sur le côté présentant la surface de roulement pour l'au moins un corps de roulement.

3. Pièce à main médicale selon la revendication 1, **caractérisée en ce que** la douille de serrage (16) est logée sur la bague extérieure de palier (7, 9) sur le côté présentant la surface de roulement pour l'au moins un corps de roulement.

4. Pièce à main médicale selon l'une des revendications précédentes, **caractérisée en ce que** l'organe de serrage (14) comprend au moins une languette de serrage.

5. Pièce à main médicale selon l'une des revendications précédentes, **caractérisée en ce que** l'organe de serrage (14) comprend au moins un corps de verrouillage (17) se mettant en prise dans une rainure côté outil.

6. Pièce à main médicale selon l'une des revendications précédentes, **caractérisée en ce que** le raccordement d'outil présente en outre une roue à couronne (12) ou un rotor pour la transmission du mouvement d'entraînement.

7. Pièce à main médicale selon l'une des revendications précédentes, **caractérisée en ce que** le raccordement d'outil présente au moins un doigt d'entraînement (18) pour la transmission d'un couple à l'outil.

8. Pièce à main médicale selon l'une des revendications précédentes, **caractérisée en ce que** la bague intérieure de palier (6, 10) est réalisée pour la transmission d'un couple sur un outil à serrer dans la douille de serrage (16), dans laquelle la bague intérieure de palier (6, 10) est dotée d'un polygone, en particulier d'un hexagone, pour une formation complémentaire sur l'outil.

9. Pièce à main médicale selon la revendication 7, **caractérisée en ce que** le doigt d'entraînement est réalisé grâce à une formation polygonale, en particulier en tant qu'hexagone pour la transmission d'un couple.

10. Pièce à main médicale selon l'une des revendications précédentes, **caractérisée en ce que** le raccordement d'outil présente un décrochement (19) dans lequel la bague de palier (6, 7, 9, 10), au niveau de laquelle le raccordement d'outil est logé sur le côté présentant la surface de roulement pour l'au moins un corps de roulement, se met en prise.
